(19) **Europäisches Patentamt / European Patent Office / Office européen des brevets**

(11) **EP 4 614 585 A1**

(12) **EUROPEAN PATENT APPLICATION**
published in accordance with Art. 153(4) EPC

(43) Date of publication:
**10.09.2025 Bulletin 2025/37**

(21) Application number: **23907600.3**

(22) Date of filing: **14.12.2023**

(51) International Patent Classification (IPC):
**H01M 4/131** (2010.01)    **H01M 4/1391** (2010.01)
**H01M 4/04** (2006.01)    **H01M 4/525** (2010.01)
**H01M 4/505** (2010.01)    **H01M 4/58** (2010.01)
**H01M 4/1395** (2010.01)    **H01M 4/38** (2006.01)
**H01M 4/48** (2010.01)

(52) Cooperative Patent Classification (CPC):
**H01M 4/04; H01M 4/131; H01M 4/1391;**
**H01M 4/1395; H01M 4/38; H01M 4/48;**
**H01M 4/505; H01M 4/525; H01M 4/58**

(86) International application number:
**PCT/KR2023/020689**

(87) International publication number:
**WO 2024/136314 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.12.2022 KR 20220182380**

(71) Applicant: **LG Energy Solution, Ltd.**
**Seoul 07335 (KR)**

(72) Inventors:
• **KOO, Dae Ryung**
**Daejeon 34122 (KR)**

• **JOO, Mun Kyu**
**Daejeon 34122 (KR)**
• **KWON, Yo Han**
**Daejeon 34122 (KR)**
• **LEE, Il Ha**
**Daejeon 34122 (KR)**
• **CHOI, Seong Won**
**Daejeon 34122 (KR)**
• **CHAE, Jong Hyun**
**Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE, LITHIUM SECONDARY BATTERY INCLUDING POSITIVE ELECTRODE, AND METHOD FOR MANUFACTURING SAME**

(57)    The present invention relates to a positive electrode, wherein the positive electrode includes a current collector; a positive electrode active material layer which is disposed on the current collector and includes a positive electrode active material; and a transfer functional layer which is disposed on the positive electrode active material layer and includes a composite represented by Formula 1, wherein a gas generation amount may be reduced by preventing a cracking phenomenon of the positive electrode active material and capacity characteristics and life characteristics may be excellent by increasing efficiency of overlithiation of the positive electrode.

[Formula 1]    $M_aO_b$

wherein, M includes at least one selected from the group consisting of iron (Fe), manganese (Mn), cobalt (Co), titanium (Ti), vanadium (V), zirconium (Zr), and nickel (Ni), and a satisfies $1.0 \leq a \leq 3.0$ and b satisfies $1.0 \leq b \leq 4.0$.

EP 4 614 585 A1

[FIG. 1]

**Description**

**TECHNICAL FIELD**

Cross-reference to Related Applications

This application claims priority from Korean Patent Application No.10-2022-0182380, filed on December 22, 2022, the disclosure of which is incorporated by reference herein.

Technical Field

The present invention relates to an overlithiated positive electrode, a lithium secondary battery including the positive electrode, and a method of preparing the lithium secondary battery.

**BACKGROUND ART**

Requirements for the use of alternative energy or clean energy have increased due to the rapid increase in the use of fossil fuels, and, as a part of this trend, power generation and electricity storage using an electrochemical reaction are the most actively researchedareas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity have been subjected to considerable research and have been commercialized and widely used.

In general, a secondary battery is composed of a positive electrode, a negative electrode, an electrolyte, and a separator. The negative electrode includes a negative electrode active material in which lithium ions released from the positive electrode are intercalated and deintercalated, and silicon-based active material particles having large discharge capacity may be used as the negative electrode active material. The silicon-based active material particle may correspond to silicon (Si) or $SiO_x$ (0<x<2). The silicon-based active material particle has an advantage of large theoretical capacity and low price. However, since the silicon-based active material particle has an excessively large volume change during battery operation, it is disadvantageous in that lifetime of the battery is rapidly decreased as the battery is cycled.

Thus, in order to minimize the volume change of the silicon-based active material particle, there is a method of using only a portion of total capacity of the silicon-based active material particles. For this purpose, a so-called pre-lithiation process is used in which lithium ions are intercalated into the negative electrode including the silicon-based active material particles in advance. Specifically, if the lithium ions are intercalated into the negative electrode by a method such as transferring lithium metal to the negative electrode, total capacity of the negative electrode may be reduced to a level of reversible capacity as the lithium ions react at irreversible sites of the negative electrode. Thus, since an amount of the lithium ions intercalated during battery operation may be suitably reduced to a level required for the battery operation, the volume change of the silicon-based active material particles may be minimized.

However, in the process of performing pre-lithiation by disposing the lithium metal on a surface of the negative electrode, excessive heat is generated due to an alloy reaction between lithium and silicon, and a possibility of ignition due to a reaction between the lithium and moisture also increases. Also, in a process of notching and punching the negative electrode, the possibility of ignition may be further increased due to an increased in reaction area between the lithium and the silicon-based active material, and there is a serious safety issue in that there also exists a possibility of ignition caused by pre-lithiated silicon-based active material particles.

Therefore, there is a need for a new technique which may suppress the possibility of excessive heat generation and ignition while improving the lifetime of the battery by intercalating lithium ions into the negative electrode in advance before battery operation.

**DISCLOSURE OF THE INVENTION**

**TECHNICAL PROBLEM**

An aspect of the present invention provides a positive electrode, in which safety in a battery preparation process is improved while an available region of a negative electrode is controlled and a cracking phenomenon of a positive electrode active material is simultaneously improved through overlithiation of the positive electrode, and a method of preparing the same.

Another aspect of the present invention provides a high-capacity lithium secondary battery, in which the cracking phenomenon of positive electrode active material particles is suppressed to reduce a gas generation amount, life characteristics are improved due to the control of the available region of the negative electrode, and unique characteristics of a negative electrode active material may be achieved without disadvantages by including the positive electrode, and a method of preparing the same.

## TECHNICAL SOLUTION

In order to solve the above-described tasks, according to an aspect of the present invention, there is provided a positive electrode which includes a current collector; a positive electrode active material layer which is disposed on the current collector and includes a positive electrode active material; and a transfer functional layer which is disposed on the positive electrode active material layer and includes a composite represented by Formula 1.

[Formula 1] $M_aO_b$

wherein, M includes at least one selected from the group consisting of iron (Fe), manganese (Mn), cobalt (Co), titanium (Ti), vanadium (V), zirconium (Zr), and nickel (Ni), and a satisfies $1.0 \leq a \leq 3.0$ and b satisfies $1.0 \leq b \leq 4.0$.

In order to solve the above-described tasks, according to another aspect of the present invention, there is provided a lithium secondary battery including a positive electrode, a negative electrode, and a separator disposed between the positive electrode and the negative electrode, wherein the positive electrode includes a current collector; a positive electrode active material layer which is disposed on the current collector and includes a positive electrode active material; and a transfer functional layer which is disposed on the positive electrode active material layer and includes the composite represented by Formula 1 and lithium, and, in a dQ/dV profile obtained during initial charging at a rate of 0.1C, a peak intensity ratio ($R_{H/L}$) calculated by Equation 1 is 0.8 or less.

$$7] \quad [\text{Equation 1}]$$

$$R_{H/L} = I_L/I_H$$

wherein, $R_{H/L}$ is a peak intensity ratio, $I_L$ is an intensity of a peak that appears at a voltage of $2.30V \pm 0.05V$, and $I_H$ is an intensity of a peak that appears at a voltage of $2.50V \pm 0.05V$.

In order to solve the above-described tasks, according to another aspect of the present invention, there is provided a method of preparing a lithium secondary battery which includes steps of: preparing an electrode assembly including a positive electrode, a negative electrode, and a separator disposed between the positive electrode and the negative electrode; and performing an activation process by disposing the electrode assembly in a battery case and injecting an electrolyte solution, wherein the positive electrode is prepared by including: a step P1 of disposing a preliminary positive electrode active material layer on a current collector and disposing a transfer functional layer on the preliminary positive electrode active material layer; a step P2 of disposing a transfer stack, which includes a base film and a lithium metal layer disposed on the base film, on the transfer functional layer to form a positive electrode structure such that the lithium metal layer and the transfer functional layer are in contact with each other; a step P3 of rolling the positive electrode structure; and a step P4 of preparing a positive electrode by removing the base film from the transfer stack after the rolling, wherein the transfer functional layer after the rolling of step P3 includes the composite of Formula 1 and lithium.

## ADVANTAGEOUS EFFECTS

A positive electrode according to the present invention is advantageous in that it may increase lifetime of a battery by reducing an available region of a negative electrode as lithium ions move to the negative electrode during an activation process through overlithiation by a specific method of lithium metal transfer and may reduce a process risk arising from pre-lithiation of the negative electrode, and an effect, in which a gas generation amount may be reduced by suppressing a cracking phenomenon of positive electrode active material particles due to a transfer functional layer during the overlithiation, may be expected.

Also, a secondary battery according to the present invention may increase capacity by including the positive electrode, and an improvement in lifetime may be expected by reducing the gas generation amount. Particularly, in a case in which a silicon-based negative electrode active material is used, since only a controllable region may be used without loss of lithium in the positive electrode due to overlithiated lithium, there is an advantage in that life characteristics may be improved by minimizing a volume change.

## BRIEF DESCRIPTION OF THE DRAWINGS

FIG. 1 is a schematic view illustrating step P1 in a method of preparing a positive electrode according to an embodiment of the present invention.

FIG. 2 is a schematic view illustrating step P1 using a transfer stack including a polymer layer in the method of preparing a positive electrode according to the embodiment of the present invention.

FIG. 3 is a schematic view illustrating step P2 in the method of preparing a positive electrode according to the embodiment of the present invention.

FIG. 4 is a schematic view illustrating step P3 in the method of preparing a positive electrode according to the embodiment of the present invention.

FIG. 5 is a scanning electron microscope (SEM) image taken from a cross section of a positive electrode of Example 1-3 according to an embodiment of the present invention.

FIG. 6 is a scanning electron microscope (SEM) image taken from a cross section of a positive electrode of Comparative Example 1-2.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

$D_{50}$ in the present specification may be defined as a particle diameter at a cumulative volume of 50% in a particle size distribution curve. The $D_{50}$, for example, may be measured by using a laser diffraction method. The laser diffraction method may generally measure a particle diameter ranging from a submicron level to a few mm and may obtain highly repeatable and high-resolution results.

## Positive Electrode

A positive electrode according to the present invention includes a current collector; a positive electrode active material layer which is disposed on the current collector and includes a positive electrode active material; and a transfer functional layer which is disposed on the positive electrode active material layer and includes a composite represented by Formula 1 below.

$$[Formula\ 1] \qquad M_aO_b$$

wherein, M includes at least one selected from the group consisting of iron (Fe), manganese (Mn), cobalt (Co), titanium (Ti), vanadium (V), zirconium (Zr), and nickel (Ni), and a satisfies $1.0 \le a \le 3.0$ and b satisfies $1.0 \le b \le 4.0$.

According to an embodiment of the present invention, the positive electrode includes a positive electrode active material layer. The positive electrode active material layer may itself constitute the positive electrode, but the positive electrode active material layer may be disposed on a positive electrode current collector, and the positive electrode active material layer may be disposed on one surface or both surfaces of the positive electrode current collector.

According to an embodiment of the present invention, the positive electrode current collector is not particularly limited as long as it has conductivity without causing adverse chemical changes in a battery, and, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness

of 3 $\mu$m to 500um, and microscopic irregularities may be formed on the surface of the current collector to improve adhesion of the positive electrode active material. The positive electrode current collector, for example, may be used in various shapes such as that of a film, a sheet, a foil, a net, a porous body, a foam body, a non-woven fabric body, and the like.

According to an embodiment of the present invention, the positive electrode active material is a material capable of causing an electrochemical reaction, wherein it may be a lithium transition metal oxide. For example, the positive electrode active material may include at least one selected from the group consisting of a layered compound, such as a lithium cobalt oxide or a lithium nickel oxide, which is substituted with at least one transition metal; a lithium manganese oxide substituted with at least one transition metal; a lithium nickel-based composite oxide represented by $Li[Ni_{1-y}M^1{}_y]O_2$ (where, $M^1$ includes at least one selected from cobalt (Co), manganese (Mn), aluminum (Al), copper (Cu), iron (Fe), magnesium (Mg), boron (B), chromium (Cr), zinc (Zn), and gallium (Ga), and $0.01 \leq y \leq 0.7$); a lithium nickel ternary composite oxide represented by $Li_{1+z}[Ni_bMn_cCo_{1-(b+c+d)}M^2{}_d]O_{(2-e)}A_e$ (where, $M^2$ includes at least one selected from the group consisting of Al, Mg, Cr, Ti, silicon (Si), and yttrium (Y), A includes at least one selected from the group consisting of fluorine (F), phosphorus (P), and chlorine (Cl), and $-0.5 \leq z \leq 0.5$, $0.1 \leq b \leq 0.8$, $0.1 \leq c \leq 0.8$, $0 \leq d \leq 0.2$, $0 \leq e \leq 0.2$, and b+c+d<1); and an olivine-based lithium metal phosphate represented by $Li_{1+x}[M^3{}_{1-q}M^4{}_q]PO_{4-r}X_r$ (where, $M^3$ includes at least one selected from the group consisting of Fe, Mn, Co, and Ni, $M^4$ includes at least one selected from the group consisting of Al, Mg, and Ti, X includes at least one selected from the group consisting of F, sulfur (S), and nitrogen (N), and $-0.5 \leq x \leq 0.5$, $0 \leq q \leq 0.5$, and $0 \leq r \leq 0.1$).

Specifically, the positive electrode active material may be composed of the lithium nickel-based composite oxide, the lithium nickel ternary composite oxide, the olivine-based lithium metal phosphate, or a combination thereof, and these may be combined to configure the positive electrode active material layer as one layer or a separate layer.

According to an embodiment of the present invention, more specifically, the positive electrode active material may include a compound of Formula A below.

$$[\text{Formula A}] \qquad Li_{1+x}[Ni_aCo_bMn_cM^1{}_{(1-a-b-c)}]O_{(2-d)}A_d$$

In Formula A,

$M^1$ may be at least one selected from the group consisting of Al, Mg, Cr, Ti, Si, and Y, and may specifically be Al.
A is at least one selected from the group consisting of F, P, and Cl, and may specifically be F.
x may satisfy $-0.5 \leq x \leq 0.5$, specifically, $-0.3 \leq x \leq 0.3$.
a may satisfy $0.6 \leq a < 1$, specifically, $0.7 \leq a \leq 0.9$.
b may satisfy $0.03 \leq b \leq 0.1$, specifically, $0.05 \leq b \leq 0.1$.
c may satisfy $0.03 \leq c \leq 0.1$, specifically, $0.05 \leq c \leq 0.1$.
d may satisfy $0 \leq d \leq 0.1$, specifically, $0 \leq d \leq 0.05$.
a, b, and c satisfy $0 < a+b+c \leq 1$, specifically, a+b+c=1.

The compound of Formula A may be in a form of a particle.

The compound of Formula A may be in a form of a secondary particle in which a plurality of primary particles are bonded to each other. Specifically, the compound of Formula 1 may be in the form of a secondary particle in which 10 or more primary particles are bonded to each other. Accordingly, there is an effect that lithium may be uniformly intercalated into and deintercalated from the positive electrode active material.

The compound of Formula A may have a $D_{50}$ of 5 $\mu$m to 15 $\mu$m, particularly 7 $\mu$m to 12 $\mu$m, and more particularly 9 $\mu$m to 10 $\mu$m. The $D_{50}$ may be a $D_{50}$ of the secondary particle. Since a positive electrode slurry is easily dispersed when the above range is satisfied, uniform coating of the positive electrode active material layer is possible.

The positive electrode active material may be included in an amount of 90 wt% to 99 wt%, particularly 92 wt% to 98 wt%, and more particularly 95 wt% to 98 wt% in the positive electrode active material layer.

According to an embodiment of the present invention, the positive electrode active material layer may further include a positive electrode binder. The positive electrode binder improves adhesion between the positive electrode active material particles and adhesion between the positive electrode active material and the positive electrode current collector. Specific examples of the positive electrode binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used.

The positive electrode binder may be included in an amount of 0.5 wt% to 5.0 wt%, particularly 1.0 wt% to 2.5 wt%, and more particularly 1.0 wt% to 2.0 wt% inthe positive electrode active material layer.

According to an embodiment of the present invention, the positive electrode active material layer may further include a positive electrode conductive agent. The positive electrode conductive agent is used to provide conductivity to the electrode, wherein any conductive agent may be used without particular limitation as long as it has suitable electron conductivity without causing adverse chemical changes in the battery. Specific examples of the positive electrode conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The positive electrode conductive agent may be included in an amount of 0.5 wt% to 30.0 wt%, particularly 0.5 wt% to 10.0 wt%, and more particularly 1.0 wt% to 4.0 wt% in the positive electrode active material layer.

According to an embodiment of the present invention, the positive electrode includes a transfer functional layer on the positive electrode active material layer, and the transfer functional layer includes a composite represented by Formula 1 below.

[Formula 1] $M_aO_b$

wherein, M includes at least one selected from the group consisting of Fe, Mn, Co, Ti, V, Zr, and Ni, and a satisfies $1.0{\leq}a{\leq}3.0$ and b satisfies $1.0{\leq}b{\leq}4.0$.

In a case in which the transfer functional layer is subjected to an overlithiation reaction, lithium and the composite of Formula 1 are chemically combined such that a portion may exist while being decomposed into metal and lithium oxide as shown in Reaction Formula 1 below and a portion of a remainder maintains a form of Formula 1 but may exist as a lithium-containing composite represented by Formula 1a below by reacting with the lithium.

[Formula 1a] $Li_kM_aO_b$

wherein, M includes at least one selected from Fe, Mn, Co, Ti, V, Zr, and Ni, and k satisfies $0{<}k{<}6$, a satisfies $1.0{\leq}a{\leq}3.0$, and b satisfies $1.0{\leq}b{\leq}4.0$.

[Reaction Formula 1] $M_aO_b + kLi \rightarrow xM + (k/2)Li_2O$

wherein, M includes at least one selected from Fe, Mn, Co, Ti, V, Zr, and Ni, and k satisfies $0{<}k{<}6$, a satisfies $1.0{\leq}a{\leq}3.0$, and b satisfies $1.0{\leq}b{\leq}4.0$.

According to an embodiment of the present invention, a reaction, which occurs in the transfer functional layer by overlithiation, may be a reaction which converts the transfer functional layer into a form of the lithium-containing composite such as Formula 1a, or allows the transfer functional layer to be decomposed by reacting with lithium. Finally, the overlithiated transfer functional layer may be a metal, for example, the metal M of Formula 1, such as Fe, Mn, and Ni, as shown in Reaction Formula 1, $Li_2O$ may be formed as a lithium oxide, and a lithium-containing composite may be formed. These forms of materials are expected to have effects of compensating for irreversible capacity by ionization of lithium from the lithium oxide and the lithium-containing composite and movement of the lithium to a negative electrode due to charge during activation and particularly reducing volume expansion by limiting an available region of a silicon negative electrode active material.

An overlithiation phenomenon occurs when lithium moves as a transfer functional layer is formed on the positive electrode active material layer and a transfer stack including a lithium metal layer is disposed on the transfer functional layer, wherein a cracking phenomenon of active material particles of the main positive electrode active material layer due to diffusion of lithium may be suppressed by the presence of the transfer functional layer.

Specifically, the movement of the lithium occurs preferentially in the transfer functional layer, and the lithium moves to an upper portion of the main positive electrode active material layer, wherein, in this case, since a phenomenon of diffusion of the lithium inside the positive electrode active material layer is alleviated as the lithium passes through the transfer functional layer, diffusion into the positive electrode active material layer does not occur or diffusion occurs only in a portion of the upper portion, and thus, particle cracking may be clearly prevented. That is, since the transfer functional layer may have lithium while acting as a buffer layer for lithium diffusion, it may protect the main positive electrode active material layer that mainly plays a role during operation and may simultaneously perform a function which may exhibit an overlithiation effect.

According to an embodiment of the present invention, the lithium of the transfer functional layer moves to the negative electrode earlier and may be used to compensate for the irreversible capacity because it has a stronger tendency to be ionized than the lithium of the positive electrode active material layer in an activation process, the battery may be operated in a state in which there is no loss in the lithium of the main positive electrode active material layer, which is expressed as capacity, due to an excess amount of lithium, and most of lithium of the negative electrode may stop their movement in the positive electrode active material layer in a charging process because lithium intercalation energy of the composite in the transfer functional layer is high and a movement distance to the transfer function layer is long. That is, between the main positive electrode active material layer and the transfer functional layer, a tendency to bind with lithium may be dominant in the main positive electrode active material layer, and, accordingly, diffusion of lithium through the main positive electrode active material layer to the transfer functional layer does not occur in a cycle process. Thus, since there may be almost no lithium loss occurring in the cycle process due to the presence of the transfer functional layer, it may function to improve both capacity characteristics and life characteristics.

According to an embodiment of the present invention, the transfer functional layer includes a composite represented by Formula 1 below.

$$[\text{Formula 1}] \qquad M_aO_b$$

wherein, M includes at least one selected from the group consisting of Fe, Mn, Co, Ti, V, Zr, and Ni, and a satisfies $1.0 \leq a \leq 3.0$ and b satisfies $1.0 \leq b \leq 4.0$.

The composite of Formula 1 may be in a form of a precursor of a commonly used positive electrode active material and accordingly has characteristics of being able to easily accept lithium, and thus, it may easily capture lithium by minimizing the movement of the lithium to the positive electrode active material layer through transfer of the lithium using the transfer stack. The lithium-containing composite of Formula 1a, which is formed by bonding the composite of Formula 1 and lithium due to this series of actions, may be controlled through rolling pressure after the transfer, activation process conditions, or a thickness of the transfer functional layer together with the use of the transfer stack.

More specifically, at least one selected from the group consisting of $Fe_2O_3$, $Fe_3O_4$, $Mn_2O_3$, $MnO_2$, $Co_3O_4$, and NiO may be used as the composite, and the composite may be in the form of a precursor of the positive electrode active material.

According to an embodiment of the present invention, as described above, the composite is decomposed or bonded to lithium due to the reaction with the lithium during overlithiation in the transfer functional layer, wherein lithium is removed from the transfer functional layer when an activation process is performed, and accordingly, the transfer functional layer includes the composite represented by Formula 1 and may further include the metal M among decomposition products, wherein, in this case, the metal M may be selected from M in Formula 1, and they may be the same type. Also, some lithium by-products due to an overlithiation reaction may remain in the transfer functional layer, and, as a result, the transfer functional layer may further include lithium, but an amount thereof may be a trace amount.

According to an embodiment of the present invention, the transfer functional layer may have a thickness of 15 $\mu$m to 40 $\mu$m. Preferably, the thickness of the transfer functional layer may be 17 $\mu$m or more, 18 $\mu$m or more, 19 $\mu$m or more, or 20 $\mu$m or more, and may be 35 $\mu$m or less, 30 $\mu$m or less, 28 $\mu$m or less, or 25 $\mu$m or less. In a case in which the thickness of the transfer functional layer is within the above range, a degree to which cracking of the active material particles is mitigated and suppressed depending on a diffusion distance of lithium may be appropriately adjusted, and a transfer functional layer, which does not impair resistance performance of the positive electrode, may be formed.

According to an embodiment of the present invention, the transfer functional layer includes a composite and may further include a conductive agent. The conductive agent may be included in an amount of 2.10 wt% to 3.00 wt% based on a total weight of the composite and the conductive agent, and the amount of the conductive agent may preferably be 2.12 wt% or more, 2.15 wt% or more, 2.20 wt% or more, 2.25 wt% or more, and 2.30 wt% or more, and may be 2.90 wt% or less, 2.85 wt% or less, 2.80 wt% or less, 2.75 wt% or less, 2.70 wt% or less, 2.65 wt% or less, and 2.60 wt% or less. If the conductive agent is mixed with the lithium-containing composite within the above range, the diffusion of lithium may be facilitated, transfer efficiency of the lithium metal layer may be increased, and problems of battery performance degradation and coating process problems may be solved.

Also, the transfer functional layer may further include a binder, and any binder material generally used during formation of the positive electrode active material layer may be equally used as the binder.

According to an embodiment of the present invention, the positive electrode may further include a lithium metal layer which is disposed on the transfer functional layer. The lithium metal layer plays a role in supplying lithium ions to the transfer functional layer and the positive electrode active material layer. The lithium metal layer includes solid-phase lithium metal, and the lithium metal layer may specifically be formed of solid-phase lithium metal. The lithium metal layer may undergo solid-phase diffusion of lithium metal into the positive electrode active material layer through transfer and rolling, and, accordingly, after the activation, the lithium metal layer may not exist or may exist in a state in which its thickness is extremely thin.

According to an embodiment of the present invention, the positive electrode may further include a polymer layer which is disposed on the positive electrode active material layer. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer.

The polymer layer may exist in contact with the positive electrode active material layer, and alternatively, the lithium metal layer may exist between the polymer layer and the positive electrode active material layer.

The polymer layer may be at least one selected from the group consisting of polyethylene terephthalate (PET), polyimide (PI), poly (methylmethacrylate) (PMMA), polypropylene, polyethylene, and polycarbonate. Accordingly, in a secondary battery including the positive electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

According to an embodiment of the present invention, in the positive electrode, the positive electrode active material layer may have a porosity of 10% to 40%, particularly 15% to 35%, and more particularly 25% to 30%. In this case, no additional thickness change may occur during rolling.

In the positive electrode according to the embodiment of the present invention, the lithium metal layer is disposed on the positive electrode through a transfer method, and lithium of the lithium metal layer is intercalated into the positive electrode active material layer by solid-phase diffusion by rolling. The lithium may move to the negative electrode during battery operation to play a role in reducing an available region of the negative electrode.

Thus, since an available range of negative electrode capacity may be reduced without loss of lithium in the positive electrode active material due to the lithium overlithiated in the positive electrode, an excessive volume change of a silicon-based active material may particularly be suppressed and life characteristics of the battery may be improved. Also, since the capacity of the positive electrode active material may be used in an entire range, there is an advantage in that battery efficiency is increased and energy density may also be maximized.

The positive electrode according to the embodiment of the present invention is characterized in that pre-lithiation is not performed by typically contacting the lithium metal layer to the negative electrode, but the lithium metal layer is transferred to the positive electrode and rolled and the lithium ions intercalated into the positive electrode are then transferred to the negative electrode in an activation process of the battery.

That is, since the negative electrode and the lithium metal layer are not in contact and the lithium ions are not directly intercalated into the negative electrode from the lithium metal layer, a phenomenon of excessive heat generation due to an alloy reaction of lithium and silicon at the negative electrode may be avoided and a possibility of ignition due to a reaction between the lithium and moisture may be significantly reduced. Furthermore, since the lithium ions are not intercalated into the negative electrode during notching and punching the negative electrode (because the pre-lithiation has not progressed), a possibility of ignition during the notching and punching process may be significantly reduced.

## Method of Preparing Positive Electrode

According to another embodiment of the present invention, a method of preparing a positive electrode includes a step P1 of disposing a preliminary positive electrode active material layer on a current collector and disposing a transfer functional layer on the preliminary positive electrode active material layer; a step P2 of disposing a transfer stack, which includes a base film and a lithium metal layer disposed on the base film, on the transfer functional layer to form a positive electrode structure such that the lithium metal layer and the transfer functional layer are in contact with each other; a step P3 of rolling the positive electrode structure; and a step P4 of preparing a positive electrode by removing the base film from the transfer stack after the rolling, wherein the transfer functional layer after the rolling of step P3 includes a composite of Formula 1 below and lithium.

[Formula 1] $\quad\quad M_aO_b$

wherein, M includes at least one selected from the group consisting of Fe, Mn, Co, Ti, V, Zr, and Ni, and a satisfies $1.0 \leq a \leq 3.0$ and b satisfies $1.0 \leq b \leq 4.0$.

According to an embodiment of the present invention, step P1 of the method of preparing a positive electrode is a step of forming a preliminary positive electrode active material layer by a method of applying a preliminary positive electrode active material on a current collector, and then disposing a transfer functional layer on the preliminary positive electrode active material layer.

According to an embodiment of the present invention, step P2 of the method of preparing a positive electrode is a step of disposing a transfer stack, which includes a base film and a lithium metal layer, on the transfer functional layer disposed on the preliminary positive electrode active material layer to form a positive electrode structure such that the lithium metal layer and the transfer functional layer are in contact with each other.

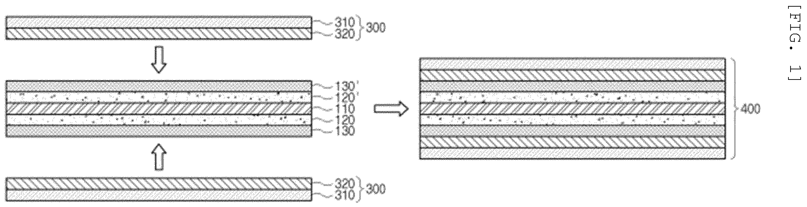

Referring to FIG. 1, a transfer stack 300 may include a base film 310 and a lithium metal layer 320 disposed on the base film 310. The base film 310 may be used without limitation as long as it is a material which may withstand high-temperature conditions that occur in a process of depositing the lithium metal layer 320 on the base film 310. Specifically, the base film may include at least one selected from the group consisting of polyethylene terephthalate (PET), polyimide (PI), poly(methylmethacrylate) (PMMA), polypropylene, polyethylene, and polycarbonate.

According to an embodiment of the present invention, the lithium metal layer may be disposed on the base film. The lithium metal layer plays a role in supplying lithium ions to the preliminary positive electrode active material layer. The lithium metal layer includes solid-phase lithium metal, and the lithium metal layer may specifically be formed of solid-phase lithium metal.

According to an embodiment of the present invention, in the transfer stack, the lithium metal layer may have a thickness of 1 μm to 10 μm, particularly 3μm to 9μm, and more particularly 4μm to 6.5μm. In a case in which the above range is satisfied, since a degree of cracking of the positive electrode active material particles on a surface of the positive electrode may be reduced, a decrease in initial capacity of the battery may be suppressed.

According to an embodiment of the present invention, a loading amount (unit: $mAh/cm^2$) of the lithium metal layer may be 4% to 40% of a loading amount (unit: $mAh/cm^2$) of the preliminary positive electrode active material layer, and may specifically be 12% to 35%, more specifically, 20% to 30%.When the above range is satisfied, since the generation of the by-product is small and lithium may be easily intercalated into the positive electrode active material, target lithium intercalation capacity may be easily achieved.

In step P2, referring to FIG. 1, preliminary positive electrode active material layers 120 and 120' are disposed on a positive electrode current collector 110, and transfer functional layers 130 and 130' may be disposed on the preliminary positive electrode active material layers 120 and 120'. The transfer stack 300 may be disposed on the transfer functional layers 130 and 130' to form a positive electrode structure 400 such that the lithium metal layer 320 and the transfer functional layers 130 and 130'are in contact with each other.

Herein, since the positive electrode current collector 110 has been described above in the description of the positive electrode, a description thereof will be omitted.

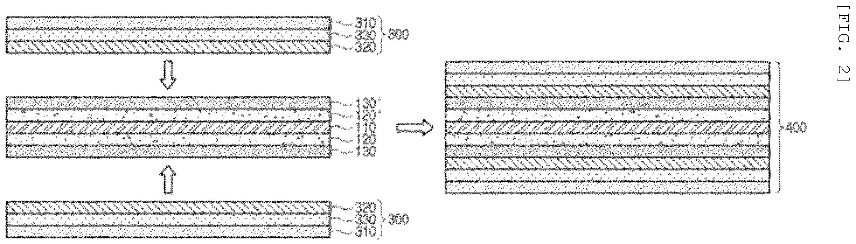

Referring to FIG. 2, the transfer stack 300 may further include a polymer layer 330. The polymer layer 330 may be disposed between the base film 310 and the lithium metal layer 320. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer. The polymer layer may exist in contact with the positive electrode active material layer, and alternatively, the lithium metal layer may exist between the polymer layer and the positive electrode active material layer.

Herein, since the polymer layer has been described above in the description of the positive electrode, a description thereof will be omitted.

The polymer layer may have a thickness of 0.1 μm to 10 μm, particularly 0.5μm to 5um, and more particularly 1μm to 2.5 μm. In a case in which the above range is satisfied, the lithium metal layer may be easily transferred to the positive electrode active material layer, and a reverse transfer phenomenon, in which the positive electrode active material layer is transferred to the transfer stack, may be prevented.

According to an embodiment of the present invention, step P3 of the method of preparing a positive electrode is a step of rolling the positive electrode structure.

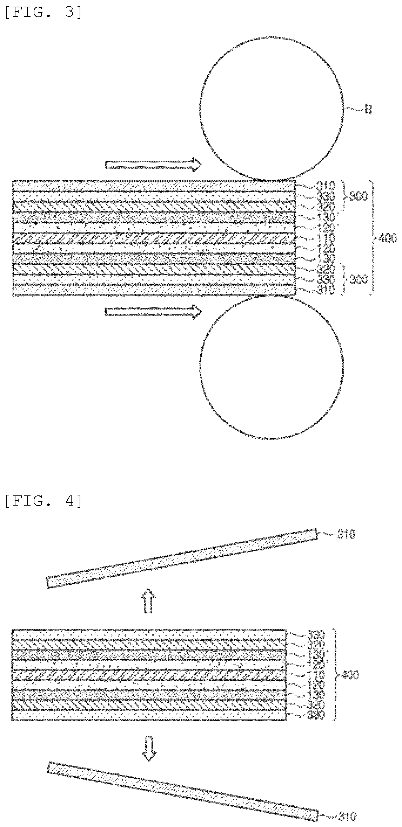

Referring to FIG. 3, in step P3, the prepared positive electrode structure 400 may be rolled. The rolling may be performed by a roll press method. Specifically, through two rolls R spaced apart from each other with a predetermined space in a vertical direction, a pressure may be applied in the vertical direction to the positive electrode structure 400 passing through the space, and the pressure may be a linear pressure. Through the rolling process, at least a portion of the lithium ions of the lithium metal layer included in the transfer stack may be intercalated into the transfer functional layer and, in some cases, into the preliminary positive electrode active material layer. In this process, the preliminary positive electrode active material layer may become a positive electrode active material layer, and the lithium-containing composite in the transfer functional layer may satisfy Formula 1. In FIGS. 3 and 4, it was illustrated that the lithium metal layer is included in the positive electrode, but, in a case in which the entire lithium metal layer is intercalated into the transfer functional layer or the transfer functional layer and the preliminary positive electrode active material layer during the rolling process, the lithium metal layer may not exist as a separate layer.

The pressure applied to the positive electrode structure during the rolling may be in a range of 10 kgf/cm to 90 kgf/cm, particularly 15 kgf/cm to 80 kgf/cm, and more particularly 20 kgf/cm to 40 kgf/cm.

In a case in which the rolling pressure is applied within the above range, the lithium metal layer may be effectively transferred, and lithium may be intercalated into the positive electrode at a desired level. A crack ratio may also be satisfied at an appropriate level. Accordingly, an effect, which may satisfy both lifetime improvement and capacity characteristics at the same time, may be achieved.

According to an embodiment of the present invention, step P4 of the method of preparing a positive electrode is a step of preparing a positive electrode by removing the base film from the transfer stack after the rolling.

Referring to FIG. 4, in step P4, a positive electrode 100 may be prepared by removing the base film 310 from the transfer stack after the rolling performed in step P3. In a case in which the polymer layer 330 is disposed between the base film 310 and the lithium metal layer 320, the base film 310 may be more easily removed by the polymer layer 330.

Also, according to an embodiment of the present invention, the method of preparing a positive electrode may further include a step P5 of resting (leaving alone) the preliminary positive electrode for 1 minute to 600 minutes, specifically, 1 minute to 30 minutes. Step P5 may be performed after step P3. Specifically, step P5 may be performed in at least one step of 'between step P3 and step P4' and 'immediately after step P4'. Since reaction heat, which has been generated by a reaction of the lithium metal layer and the preliminary positive electrode active material layer in step P3, may be effectively released by step P5, lithium is uniformly intercalated into the positive electrode, and thus, there is an effect of reducing the generation of the by-product.

In addition, since the prepared positive electrode has been previously described, a description thereof will be omitted.

**Lithium Secondary Battery**

According to another embodiment of the present invention, a lithium secondary battery includes a positive electrode, a negative electrode, and a separator disposed between the positive electrode and the negative electrode, wherein the positive electrode includes a current collector; a positive electrode active material layer which is disposed on the current collector and includes a positive electrode active material; and a transfer functional layer which is disposed on the positive electrode active material layer and includes a composite represented by Formula 1 and lithium, and, in a dQ/dV profile obtained during initial charging at a rate of 0.1C, a peak intensity ratio ($R_{H/L}$) calculated by Equation 1 below is 0.75 or less, wherein the lithium secondary battery may be a lithium secondary battery before an activation process.

$$[Equation\ 1]$$

$$R_{H/L} = I_L / I_H$$

wherein, $R_{H/L}$ is a peak intensity ratio, $I_L$ is an intensity of a peak that appears near a potential difference of $2.30V \pm 0.05V$, and $I_H$ is an intensity of a peak that appears near a potential difference of $2.50V \pm 0.05V$.

Since the positive electrode has been previously described, a description thereof will be omitted.

In the dQ/dV profile obtained during initial charging at a rate of 0.1C, the lithium secondary battery may have a peak intensity ratio ($R_{H/L}$) calculated by Equation 1 of 0.75 or less, preferably, 0.70 or less, 0.65 or less, 0.60 or less, and 0.57 or less. Specifically, in a case in which the transfer functional layer is not applied, an amount of change in charge according to an amount of change in voltage shows an irregular behavior as a potential difference is increased while the positive electrode active material particles are cracked, but, in a case in which the transfer functional layer is applied, since the amount of change in charge according to the amount of change in voltage is constant as the potential difference is increased, it may be understood that the cracking phenomenon of the positive electrode active material is suppressed and there is almost no damage.

That is, the fact that the ratio of the peak intensity at the low potential to the peak intensity at the high potential is lower than 0.75 may indicate that the positive electrode active material particles may remain intact due to the presence of the transfer functional layer even though it is an overlithiated positive electrode and, accordingly, the dQ/dV profile is also stabilized.

Also, according to an embodiment of the present invention, a lithium secondary battery includes a positive electrode, a negative electrode, and a separator disposed between the positive electrode and the negative electrode, wherein the positive electrode includes a current collector; a positive electrode active material layer which is disposed on the current collector and includes a positive electrode active material; and a transfer functional layer which is disposed on the positive electrode active material layer and includes a composite represented by Formula 1, wherein the lithium secondary battery may be a lithium secondary battery after an activation process. Since the positive electrode has been previously described in detail, a description thereof will be omitted.

According to an embodiment of the present invention, the negative electrode includes a negative electrode active material layer, the negative electrode active material layer may include a negative electrode active material, and a silicon-based negative electrode active material, a carbon-based negative electrode active material, or a combination thereof may be used as the negative electrode active material.

According to an embodiment of the present invention, the negative electrode active material may include a silicon-based negative electrode active material. The silicon-based negative electrode active material may include at least one of Si and $SiO_x$ (0<x<2).

The Si is silicon particles, wherein it may be silicon particles (particles formed of silicon), so-called Pure Silicon. The silicon particles may effectively improve the capacity of the negative electrode. The $SiO_x$ (0<x<2) may be in a form including Si and $SiO_2$, and the Si may constitute a phase. That is, x corresponds to a number ratio of oxygen (O) to Si included in the $SiO_x$ (0<x<2). In a case in which the silicon-based composite particle includes the $SiO_x$ (0<x<2), discharge capacity of the secondary battery may be improved.

According to an embodiment of the present invention, the silicon-based negative electrode active material has a problem of extremely poor life characteristics due to extreme volume changes during battery operation, but, in a case in which it is combined with the positive electrode according to the present invention, since excess lithium ions, not lithium in the positive electrode active material which determines capacity, are transferred to the silicon-based negative electrode active material when activated from the overlithiated positive electrode to react with the silicon-based negative electrode active material in advance, an irreversible phase is formed to reduce the available region, and, accordingly, the volume changes during battery operation are not severe so that the lifetime may be significantly improved and high capacity characteristics, which are inherent characteristics of the silicon-based negative electrode active material, may be sufficiently achieved.

According to an embodiment of the present invention, the negative electrode active material may further include a carbon-based negative electrode active material. The carbon-based negative electrode active material may include at least one selected from the group consisting of artificial graphite, natural graphite, and graphitized meso-carbon microbeads.

According to an embodiment of the present invention, the negative electrode active material layer may further include a negative electrode binder. The negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

According to an embodiment of the present invention, the negative electrode active material layer may further include a negative electrode conductive agent. The negative electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used.

According to an embodiment of the present invention, the secondary battery includes the separator. The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the secondary battery may further include an electrolyte. The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a nonaqueous organic solvent and a metal salt. Examples of the nonaqueous organic solvent may be aprotic organic solvents, such as N-methyl-2-pyrrolidone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the nonaqueous electrolyte solution, wherein, for example, at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving the life characteristics of the battery, suppressing a decrease in battery capacity, and improving discharge capacity of the battery.

According to an embodiment of the present invention, a method of preparing the above-described lithium secondary battery is provided, wherein the preparation method includes steps of: preparing an electrode assembly including a positive electrode, a negative electrode, and a separator disposed between the positive electrode and the negative electrode; and performing an activation process by disposing the electrode assembly in a battery case and injecting an electrolyte solution.

Specifically, since a method of preparing the positive electrode is the same as that described above, a description thereof will be omitted.

With respect to the lithium secondary battery according to the embodiment of the present invention, the above-described $R_{H/L}$ value according to the dQ/dV profile may be a value derived from a profile which is obtained during initial charge and discharge in which the activation process is performed.

As described above, since the secondary battery including the positive electrode according to the present invention stably exhibits excellent capacity and capacity retention, the secondary battery is suitable for portable devices, such as mobile phones, notebook computers, and digital cameras, and electric cars such as hybrid electric vehicles (HEVs) .

Accordingly, according to another embodiment of the present invention, a battery module including the secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

## Examples

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

## Electrode Preparation

## Example 1-1

A transfer stack, which included a PET film (base film), a polymer layer (2.5 $\mu$m thick) disposed on the PET film and formed of PMMA, and a lithium metal layer (6.2 $\mu$m thick, loading amount of 1.26 mAh/cm$^2$) disposed on the polymer layer and formed of solid-phase lithium metal, was prepared.

$Li[Ni_{0.96}Co_{0.05}Mn_{0.08}Al_{0.01}]O_2$ was used as a positive electrode active material. The positive electrode active material was in a form of a secondary particle in which a plurality (10 or more) of $Li[Ni_{0.86}Co_{0.05}Mn_{0.08}Al_{0.01}]O_2$ primary particles were bonded to each other, and an average particle diameter $D_{50}$ of the secondary particles was 9 $\mu$m. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 12 $\mu$m) as a positive electrode current collector, was prepared. The preliminary positive electrode active material layer had a loading amount of 4.5 mAh/cm$^2$ and a thickness of 140 $\mu$m.

In addition, after a slurry containing 94.54 wt% of $Fe_2O_3$ having an average particle diameter ($D_{50}$) of 0.5 $\mu$m, 2.86 wt% of carbon black, and 2.6 wt% of polyvinylidene fluoride (PVDF) was applied to the preliminary positive electrode active material layer and dried to form a 30 $\mu$m thick transfer functional layer, the transfer stack was disposed on the transfer functional layer on the preliminary positive electrode active material layer to allow the lithium metal layer to be in contact with the transfer functional layer.

Thereafter, the positive electrode having the transfer stack disposed thereon was rolled by a roll press method and was then left standing for 24 hours. A pressure during the rolling was 20 kgf/cm. Through this, lithium ions of the lithium metal layer were intercalated into the preliminary positive electrode active material layer to form a positive electrode active material layer. Thereafter, the base film was removed and the rolled positive electrode was left standing for 10 minutes to prepare a positive electrode including the positive electrode current collector, the positive electrode active material layer, the transfer functional layer, and the polymer layer.

**Example 1-2**

A positive electrode was prepared in the same manner as in Example 1-1 except that the thickness of the transfer functional layer was 25 $\mu$m.

**Example 1-3**

A positive electrode was prepared in the same manner as in Example 1-1 except that the thickness of the transfer functional layer was 20um.

**Example 1-4**

A positive electrode was prepared in the same manner as in Example 1-1 except that $Mn_2O_3$ having an average particle diameter ($D_{50}$) of 0.5 $\mu$m was used instead of the $Fe_2O_3$ included in the transfer functional layer, and the thickness of the transfer functional layer was 20um.

**Example 1-5**

A positive electrode was prepared in the same manner as in Example 1-1 except that $Co_3O_4$ having an average particle diameter ($D_{50}$) of 0.5 $\mu$m was used instead of the $Fe_2O_3$ included in the transfer functional layer, and the thickness of the transfer functional layer was 20um.

**Example 1-6**

A positive electrode was prepared in the same manner as in Example 1-1 except that the lithium metal layer had a thickness of 3.0$\mu$m and a loading amount of 0.62 mAh/cm$^2$.

**Comparative Example 1-1**

A positive electrode was prepared in the same manner as in Example 1-1 except that overlithiation was not performed and the transfer stack and the transfer functional layer were not used.

**Comparative Example 1-2**

A positive electrode was prepared in the same manner as in Example 1-1 except that the transfer functional layer was not used.

**Comparative Example 1-3**

$Li[Ni_{0.86}Co_{0.05}Mn_{0.08}Al_{0.01}]O_2$ was used as a positive electrode active material. The positive electrode active material was in a form of a secondary particle in which a plurality (10 or more) of primary particles were bonded to each other, and an average particle diameter $D_{50}$ of the secondary particles was 9 $\mu$m. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 12 $\mu$m) as a positive electrode current collector, was prepared. The preliminary positive electrode active material layer had a loading amount of 4.5 mAh/cm$^2$ and a thickness of 140 $\mu$m.

The positive electrode and a lithium metal counter electrode facing the positive electrode were prepared, a polyethylene separator was disposed between the positive electrode and the lithium metal counter electrode, and an electrolyte (ethylene carbonate (EC)/ethyl methyl carbonate (EMC) = 3/7 (volume ratio), lithium hexafluorophosphate ($LiPF_6$ 1 mol)) was injected to prepare a cell for pre-lithiation.

An electrochemical charger and discharger was connected to the cell for pre-lithiation, and the positive electrode was overlithiated by electrochemically charging the cell for pre-lithiation at 0.1 C to reach 120% of charge capacity of the positive electrode.

**Experimental Example** 1: **Electrode Cross Section Evaluation**

For the positive electrodes and the negative electrodes which were prepared in the above examples and comparative examples, the presence of cracks in the active material particles was measured by the following method.

After one day after completion of the preparation of each positive electrode, a cross section of the positive electrode was analyzed to set a region of 20 $\mu$m in a depth direction and 200 $\mu$m in an in-plane direction from a surface of the active material layer as a reference region, and a crack region and a particle region within this region were divided to obtain areas. The crack region was a portion where the particles were broken, and the particle region was a region where the particles were not broken, wherein a scanning electron microscope (SEM) image was obtained from a cross section of the electrode, which was cut by ion milling, at a magnification of 2,500.

In the SEM cross-sectional image, a length at which damaged active material particles were observed was measured, and, in each of the examples and the comparative examples, a case where damaged active material particles were observed to a depth of 50% or more of the thickness of the lithium metal layer used for the transfer was evaluated as C, a case where damaged active material particles were observed, but were observed only within a depth of less than 50% was evaluated as B, and a case where no damaged active material particles were observed was evaluated as C.

[Table 1]

|  | The presence of cracks (A/B/C) |
| --- | --- |
| Example 1-1 | A |
| Example1-2 | A |
| Example 1-3 | A |
| Example 1-4 | A |
| Example 1-5 | A |
| Example 1-6 | A |
| Comparative Example 1-1 | A |
| Comparative Example 1-2 | C |
| Comparative Example 1-3 | A |

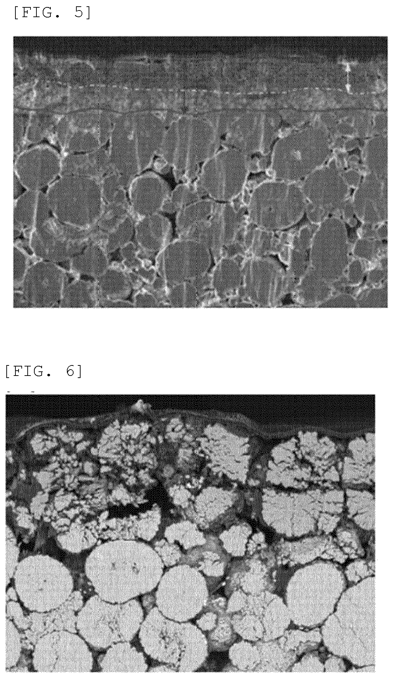

As shown in Table 1, no cracking phenomenon of the active material was observed in a case where lithium was transferred to the positive electrode including the transfer functional layer, but, with respect to the positive electrode without a transfer functional layer, a serious cracking phenomenon was observed in the active material layer. Specifically, Figure 5 is an SEM image taken from the cross section of the positive electrode of Examples 1-3, wherein a solid line in an upper portion is a transfer functional layer and a dotted line is a depth to which lithium has been transferred. It may be confirmed that there was no damage to the positive electrode active material due to the presence of the transfer functional layer in the upper portion. Also, Figure 6 is an SEM image taken from the cross section of the positive electrode of Comparative Example 1-2, wherein, in this case, it may be confirmed that the active material above the positive electrode active material layer was very severely damaged. Accordingly, it was confirmed that, if the transfer functional layer is used, since lithium may be stably transferred to compensate for irreversible capacity without damaging the positive electrode active material layer, it may contribute to improve durability and performance of the battery.

**Preparation of Lithium Secondary Batteries**

**Example 2-1**

Silicon particles having an average particle diameter $D_{50}$ of 5$\mu$m was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm$^2$ and a thickness of 75um.

The positive electrode of Example 1-1, the negative electrode, and a porous polyethylene separator were assembled using a winding method, and a preliminary lithium secondary battery was prepared by injecting an electrolyte (ethylene carbonate (EC)/ethylmethyl carbonate (EMC) = 3/7 (volume ratio) and lithium hexafluorophosphate (LiPF$_6$ 1 mol) into the assembled battery.

The preliminary lithium ion secondary battery was charged at a C-rate of 0.1C to 4.2V and then discharged to 2.5V to perform an activation process.

### Examples 2-2 to 2-6

Lithium secondary batteries were prepared in the same manner as in Example 2-1 except that the positive electrodes of Examples 1-2 to 1-6 were respectively used instead of the positive electrode of Example 1-1.

### Comparative Examples 2-1 to 2-3

Lithium secondary batteries were prepared in the same manner as in Example 2-1 except that the positive electrodes of Comparative Examples 1-1 to 1-3 were respectively used instead of the positive electrode of Example 1-1.

### Experimental Example 2: Initial Charge and Discharge Characteristics Evaluation

Initial charge capacity and discharge capacity were evaluated for the lithium secondary batteries of Examples 2-1 to 2-6 and Comparative Examples 2-1 to 2-3 under the following conditions, and $R_{H/L}$ was obtained through Equation 1 below using a dQ/dV profile during initial charge.

Charging conditions: CC(constant current)/CV (constant voltage) (5mV/0.005 C current cut-off) 4.2 V
Discharging conditions: CC(constant current) condition 2.5V

$$[Equation\ 1]$$

$$R_{H/L}\ =\ I_L/I_H$$

wherein, $R_{H/L}$ is a peak intensity ratio, $I_L$ is an intensity of a peak that appears at a voltage of 2.30V$\pm$0.05V, and $I_H$ is an intensity of a peak that appears at a voltage of 2.50V$\pm$0.05V.

Also, a ratio of a difference between the discharge capacity of the target example or comparative example and the discharge capacity of Comparative Example 2-1 based on Comparative Example 2-1, which was the positive electrode not subjected to overlithiation, was expressed as a percentage.

[Table 2]

| | $R_{H/L}$ ($I_L/I_H$) (dQ/dV profile) | Initial charge capacity (mAh/cm$^2$) | Initial discharge capacity (mAh/cm$^2$) | Discharge capacity reduction rate (%) |
|---|---|---|---|---|
| Example 2-1 | 0.512 | 5.73 | 4.12 | 3.96 |
| Example 2-2 | 0.503 | 5.61 | 4.13 | 3.73 |
| Example 2-3 | 0.485 | 5.60 | 4.16 | 3.03 |
| Example 2-4 | 0.518 | 5.44 | 4.11 | 4.40 |
| Example 2-5 | 0.557 | 5.32 | 4.08 | 5.20 |
| Example 2-6 | 0.407 | 5.25 | 4.18 | 2.60 |
| Comparative Example 2-1 | - | 4.85 | 4.29 | 0 |
| Comparative Example 2-2 | 1.350 | 5.78 | 4.03 | 6.06 |
| Comparative Example 2-3 | 0.780 | 5.57 | 3.98 | 7.22 |

Referring to Table 2, with respect to the examples, peaks of charge/discharge curves were confirmed to have $R_{H/L}$ values of 0.75 or less, but, with respect to Comparative Examples 2-2 and 2-3, since overlithiation was not performed in a state in which the transfer functional layer was used as a transfer method, peaks appeared to have values greater than 0.75. Also, initial charge capacities of the batteries of Examples 2-1 to 2-6 were significantly increased due to overlithiation, and, accordingly, it may be confirmed that most of the transferred lithium was charged into the negative electrode so that the overlithiation was performed normally.

In addition, with respect to Comparative Example 2-2, initial charge capacity was increased, but the active material layer was cracked due to the absence of the transfer functional layer, and, as a result, it may be confirmed that discharge capacity was significantly reduced, and, with respect to Comparative Example 2-3, initial charge capacity was increased as lithium was injected into the positive electrode using an electrochemical method rather than the transfer method, but it may be confirmed that discharge capacity was rapidly reduced. The reason for this may be that the lithium also penetrated deeply in a thickness direction of the positive electrode active material layer as the electrochemical method was performed, and, as a result, since an amount of the lithium, which was not accommodated, was increased, a large amount of lithium by-products was generated throughout the active material layer, and thus, lithium loss was increased.

[Description of the Symbols]

110: Positive Electrode Current Collector
120, 120': Preliminary Positive Electrode Active Material Layer
130, 130': Transfer Functional Layer
300: Transfer Stack
310: Base Film
320: Lithium Metal Layer
330: Polymer Layer
400: Positive Electrode Structure
R: Roll

**Claims**

1. A positive electrode comprising a current collector; a positive electrode active material layer which is disposed on the current collector and includes a positive electrode active material; and a transfer functional layer which is disposed on the positive electrode active material layer and includes a composite represented by Formula 1:

   [Formula 1]        $M_aO_b$

   wherein, M comprises at least one selected from the group consisting of iron (Fe), manganese (Mn), cobalt (Co), titanium (Ti), vanadium (V), zirconium (Zr), and nickel (Ni), and a satisfies $1.0 \leq a \leq 3.0$ and b satisfies $1.0 \leq b \leq 4.0$.

2. The positive electrode of claim 1, wherein the composite represented by Formula 1 is at least one selected from the group consisting of $Fe_2O_3$, $Fe_3O_4$, $Mn_2O_3$, $MnO_2$, $Co_3O_4$, and NiO.

3. The positive electrode of claim 1, wherein the transfer functional layer further comprises at least one selected from the group consisting of metal M, lithium metal, and $Li_2O$, and
   the metal M is at least one selected from the group consisting of Fe, Mn, Co, Ti, V, Zr, and Ni.

4. The positive electrode of claim 1, wherein the transfer functional layer has a thickness of 15 $\mu$m to 40 $\mu$m.

5. The positive electrode of claim 1, wherein the transfer functional layer further comprises a conductive agent.

6. The positive electrode of claim 5, wherein the conductive agent is included in an amount of 2.10 wt% to 3.00 wt% based on a total weight of the composite and the conductive agent.

7. The positive electrode of claim 1, wherein the positive electrode active material is at least one selected from the group consisting of a lithium cobalt oxide, a lithium nickel oxide, a lithium manganese oxide, a lithium nickel-based composite oxide, a lithium nickel ternary composite oxide, a lithium manganese-based composite oxide, and a lithium transition metal phosphate.

8. The positive electrode of claim 1, further comprising a lithium metal layer which is disposed on the transfer functional layer.

9. A lithium secondary battery comprising a positive electrode, a negative electrode, and a separator disposed between the positive electrode and the negative electrode,

wherein the positive electrode comprises a current collector; a positive electrode active material layer which is disposed on the current collector and includes a positive electrode active material; and a transfer functional layer which is disposed on the positive electrode active material layer and includes a composite represented by Formula 1 and lithium, and
in a dQ/dV profile obtained during initial charging at a rate of 0.1C, a peak intensity ratio ($R_{H/L}$) calculated by Equation 1 is 0.75 or less:

$$[\text{Equation 1}]$$

$$R_{H/L} = I_L/I_H$$

wherein, $R_{H/L}$ is a peak intensity ratio, $I_L$ is an intensity of a peak that appears at a voltage of $2.30V \pm 0.05V$, and $I_H$ is an intensity of a peak that appears at a voltage of $2.50V \pm 0.05V$.

10. The lithium secondary battery of claim 9, wherein the negative electrode comprises a negative electrode active material layer, and the negative electrode active material layer comprises a negative electrode active material, wherein the negative electrode active material comprises a silicon-based negative electrode active material.

11. A method of preparing a lithium secondary battery, the method comprising steps of: preparing an electrode assembly including a positive electrode, a negative electrode, and a separator disposed between the positive electrode and the negative electrode; and performing an activation process by disposing the electrode assembly in a battery case and injecting an electrolyte solution,
wherein the positive electrode is prepared by including:

a step P1 of disposing a preliminary positive electrode active material layer on a current collector and disposing a transfer functional layer on the preliminary positive electrode active material layer;
a step P2 of disposing a transfer stack, which includes a base film and a lithium metal layer disposed on the base film, on the transfer functional layer to form a positive electrode structure such that the lithium metal layer and the transfer functional layer are in contact with each other;
a step P3 of rolling the positive electrode structure; and
a step P4 of preparing a positive electrode by removing the base film from the transfer stack after the rolling, wherein the transfer functional layer after the rolling of step P3 comprises a composite of Formula 1 and lithium:

$$[\text{Formula 1}] \qquad M_aO_b$$

wherein, M comprises at least one selected from the group consisting of iron (Fe), manganese (Mn), cobalt (Co), titanium (Ti), vanadium (V), zirconium (Zr), and nickel (Ni), and a satisfies $1.0 \leq a \leq 3.0$ and b satisfies $1.0 \leq b \leq 4.0$.

12. The method of claim 11, wherein the rolling in step P3 is performed by a roll-to-roll method.

13. The method of claim 11, wherein the lithium metal layer has a thickness of 1 $\mu$m to 10 $\mu$m.

14. The method of claim 11, wherein a loading amount of the lithium metal layer is 4% to 40% of a loading amount of the preliminary positive electrode active material layer.

15. The method of claim 11, wherein the transfer stack further comprises a polymer layer, and the polymer layer is disposed between the base film and the lithium metal layer.

[FIG. 1]

[FIG. 2]

[FIG. 3]

[FIG. 4]

[FIG. 5]

[FIG. 6]

## INTERNATIONAL SEARCH REPORT

| International application No. |
|---|
| **PCT/KR2023/020689** |

| A. | CLASSIFICATION OF SUBJECT MATTER |
|---|---|

**H01M 4/131**(2010.01)i; **H01M 4/1391**(2010.01)i; **H01M 4/04**(2006.01)i; **H01M 4/525**(2010.01)i; **H01M 4/505**(2010.01)i; **H01M 4/58**(2010.01)i; **H01M 4/1395**(2010.01)i; **H01M 4/38**(2006.01)i; **H01M 4/48**(2010.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/04(2006.01); H01M 10/052(2010.01); H01M 4/13(2010.01); H01M 4/134(2010.01); H01M 4/64(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집전체(current collector), 전사(printing), 금속산화물(metal oxide), 리튬 (lithium), 층(layer), 도전재(conductive material), 양극활물질(positive electrode active material), 압연(rolling)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2016-0061167 A (SAMSUNG SDI CO., LTD.) 31 May 2016 (2016-05-31) See paragraphs [0003], [0017], [0018], [0024]-[0036], [0048] and [0051]-[0066]; and figures 1-3. | 1-4,7,9 |
| Y | | 5,6,10 |
| A | | 8,11-15 |
| Y | KR 10-2019-0108842 A (SAMSUNG SDI CO., LTD.) 25 September 2019 (2019-09-25) See paragraphs [0035]-[0041], [0060], [0067]-[0069], [0077] and [0081]-[0084]; and figures 2 and 3. | 5,6,10 |
| A | KR 10-1625602 B1 (KMG INC.) 30 May 2016 (2016-05-30) See paragraphs [0022]-[0028]; and figures 2-4. | 1-15 |
| A | US 2013-0260234 A1 (HSIAO, Bor-Yuan et al.) 03 October 2013 (2013-10-03) See claims 1-12. | 1-15 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 March 2024** | **25 March 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/020689** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112290029 A (NINGDE CONTEMPORARY AMPEREX TECHNOLOGY CO., LTD.) 29 January 2021 (2021-01-29)<br>      See claims 1-19. | 1-15 |

**INTERNATIONAL SEARCH REPORT**
Information on patent family members

International application No.

**PCT/KR2023/020689**

| Patent document cited in search report | | | Publication date (day/month/year) | Patent family member(s) | | | Publication date (day/month/year) |
|---|---|---|---|---|---|---|---|
| KR | 10-2016-0061167 | A | 31 May 2016 | US | 2016-0149209 | A1 | 26 May 2016 |
| KR | 10-2019-0108842 | A | 25 September 2019 | KR | 10-2195725 | B1 | 28 December 2020 |
| KR | 10-1625602 | B1 | 30 May 2016 | | None | | |
| US | 2013-0260234 | A1 | 03 October 2013 | TW | 201340449 | A | 01 October 2013 |
| CN | 112290029 | A | 29 January 2021 | CN | 110943225 | A | 31 March 2020 |
| | | | | EP | 3951958 | A1 | 09 February 2022 |
| | | | | US | 2022-0052346 | A1 | 17 February 2022 |
| | | | | WO | 2020-220686 | A1 | 05 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220182380